# EUROPEAN PATENT SPECIFICATION

(11) **EP 1 292 167 B1**
(45) Date of publication and mention of the grant of the patent: **17.01.2007**
(21) Application number: 02019767.9
(22) Date of filing: 04.09.2002
(51) Int. Cl.: H04Q 7/38

(54) **Call connection system and call connection method**
System und Verfahren für Rufverbindungsaufbau
Système et procédé de connection d'appel

(30) Priority: 07.09.2001 JP 2001271145
(43) Date of publication of application: 12.03.2003
(73) Proprietor: NEC CORPORATION, Tokyo (JP)
(72) Inventor: Ogura, Tomohiro c/o NEC Corporation, Minato-ku, Tokyo (JP); Sonetaka, Noriyoshi c/o NEC Corporation, Minato-ku, Tokyo (JP)
(74) Representative: Vossius & Partner

(56) References cited:
- EP-A- 0 954 196
- WO-A-01/31957
- WO-A-01/31959
- US-B1- 6 192 232

## Description

The present invention relates to a call connection system and call connection method which are used for emergencies and, more particularly, to a call connection system and call connection method which are suitable for emergency calls by radio.

In general, in emergencies like sudden sicknesses and fires, emergency notification to corresponding places to make contact is done by telephones. In such emergency notification, if the line to a destination is congested, a telephone call cannot be made during such a period. When a fixed telephone line is to be used, it hardly occurs that a line to a destination is congested.

When a radio terminal apparatus designed to perform speech communication by radio using TDMA (Time Division Multiple Access), like a cell phone or PHS (Person Handyphone System) terminal, is used, an idle slot is ensured, and a speech signal from the radio terminal apparatus is inserted in the slot, thereby allowing speech communication. Such slots are shared by radio terminal apparatuses accommodated under the supervision of a radio base station. If, therefore, the number of radio terminal apparatuses accommodated which require one radio base station for speech communication exceeds the number of slots, all the slots are simultaneously used. In such a case, even if an emergency caller tries to perform speech communication, he/she cannot perform speech communication until an idle slot occurs.

In this specification, for the sake of descriptive convenience, such calls that demand quick connection or calls that should be connected preferentially over other calls will be collectively referred to as "emergency calls". Other calls that are generated when normal connection is to be made will be referred to as "general calls".

A technique of ensuring an emergency call is disclosed in WO 98/24250 (reference 1). Reference 1 describes an apparatus and method which assign dedicated slots to special mobile stations (radio terminal apparatuses) and allow the special radio terminal apparatuses to use the slots as needed. According to the apparatus and method described in reference 1, since the order of calls is determined among each radio terminal apparatus, even if an emergency occurs in a general radio terminal apparatus and originates a call, the call is not preferentially handled as an emergency call.

In order to solve this problem, an apparatus and method are disclosed in JP-A- 2000-350252 (reference 2), in which even when all the slots are occupied by general calls with low priority, since slots (traffic) dedicated to emergency calls are assigned in advance, channels corresponding to the number of slots assigned are ensured for emergency calls.

According to the apparatus and method disclosed in reference 2, however, when slots are assigned to the priority levels, respectively, these slots cannot be used at levels other than the assigned priority levels. Even if, therefore, all the slots to which emergency calls are assigned are used and slots for calls with lower priority levels are idle, these idle slots cannot be assigned to emergency calls.

In order to solve such a problem, according to JP-A- 11-150577 (reference 3), when all the slots to which emergency calls are assigned are used and slots with lower priority levels are idle, emergency calls can be originated by using these slots with lower priority levels.

Even if such techniques are used for emergency calls, the following problems are posed.

First, consider a case wherein when there are idle slots which are assigned to emergency calls and other general call slots are fully used, a general call is generated. Obviously, in this case, speech communication based on the general call with a low priority level cannot be performed by using a slot assigned to an emergency call. In practice, slots are always assigned to emergency calls with a certain margin. In consideration of this, idle emergency call slots must be effectively used for general calls.

Second, consider control at the time of handover. When a radio terminal apparatus which has originated an emergency call moves from the area covered by one radio base station to the area covered by another radio base station, the state of the emergency call cannot be ensured by the conventional apparatuses and methods.

In WO-A- 01/31957, a method and a system for ensuring successful set up of calls in a telephone exchange system comprising a local exchange, an access node an a concentrating interface is disclosed, wherein the concentrating interface is divided into two or more parts.

It is an-object of the present invention to provide a call connection system and call connection method which can effectively use special slots assigned to emergency calls.

In order to achieve the above object, according to the present invention, there is provided a call connection system and method with the features of the claims.
Fig. 1 is a schematic view of a call connection system according to the first embodiment of the present invention;
Fig. 2 is a view showing the configuration of slots, which shows an example of the pattern sequence used by the call connection system (TDMA scheme) in Fig. 1;
Fig. 3 is a view showing the configuration of slots, which shows another example of the pattern sequence;
Fig. 4 is a flow chart showing origination processing in an active slot management unit in Fig. 1;
Fig. 5 is a flow chart showing the details of the general call notification processing shown in Fig. 4;
Figs. 6A to 6D are views showing the states of slots when a general call and emergency call are generated in the absence of idle general call slots;
Fig. 7 is a flow chart showing general call notification processing in a call connection system according to the second embodiment of the present invention;
Figs. 8A and 8B are views showing the states of slots when the total number of available slots is 16 in the call connection system shown in Fig. 7;
Fig. 9 is a sequence diagram showing termination processing from a fixed telephone in a call connection system according to the third embodiment of the present invention;
Fig. 10 is a schematic view showing a call connection system according to the fourth embodiment of the present invention;
Fig. 11 is a flow chart showing general call connection processing in the same service area in the call connection system in Fig. 10;
Fig. 12 is a schematic view showing a call connection system according to the fifth embodiment of the present invention;
Fig. 13 is a flow chart showing connection processing at the time of handover in the call connection system in Fig. 12;
Fig. 14 is a schematic view showing a call connection system according to the sixth embodiment of the present invention;
Fig. 15 is a sequence diagram showing general call origination processing in the call connection system in Fig. 14;
Fig. 16 is a sequence diagram showing general call termination processing from a telephone to a radio terminal apparatus under the supervision of a radio base station having no idle general call slot in the call connection system in Fig. 14; and
Fig. 17 is a block diagram showing the CPU of an active slot management unit.

The present invention will be described in detail below with reference to the accompanying drawings.

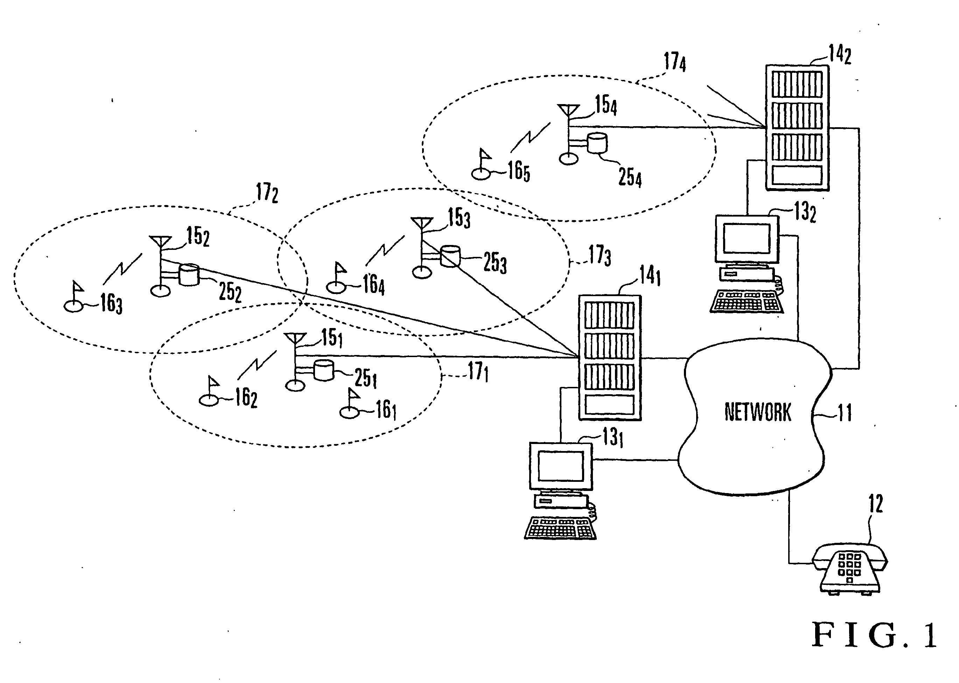

Fig. 1 shows the schematic arrangement of a call connection system according to the first embodiment of the present invention. In the system shown in Fig. 1, a fixed telephone 12 which is a wire telephone, first and second NMSs (Network Management Systems) 13₁ and 13₂, and first and second access nodes 14₁ and 14₂ for accessing a network 11 which performs telephone communication and the like are connected to the network 11. First to third radio base stations 15₁ to 15₃ are connected to the access node 14₁. A plurality of radio base stations including a fourth radio base station 15₄ are connected to the access node 14₂. Service areas (cells) 17₁, 17₂,... respectively managed by the radio base stations 15₁, 15₂,... are so arranged as to partially overlap each other without leaving any gap between them. This arrangement allows radio terminal apparatuses 16₁, 16₂,... to communicate with the fixed telephone 12 and radio terminal apparatuses other than the local apparatuses from any places.

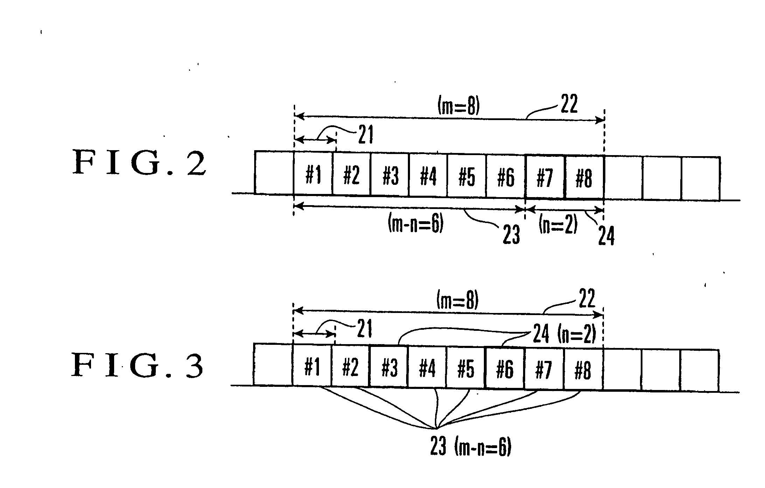

Fig. 2 shows a slot configuration used when communication between a radio base station and a radio terminal apparatus is done by using the TDMA scheme. Assume that the radio base station 15₁ is equipped with one radio unit, the number of available slots 22 per radio unit is represented by m, and the number of emergency call slots 24 is represented by n. For the sake of simplicity, consider a case wherein available slot count m = 8, and emergency call slot count n = 2. The delimited units indicated by #1 to #8 are slots 21. Eight consecutive slots 21 are the available slots 22. The number of general call slots 23 is given by m - n = 6. In the above case, slots #1 to #6 are the general call slots 23, and slots #7 and #8 are the emergency call slots 24. However, there is no specific limitation on which slots are assigned the general call slots 23 and emergency call slots 24.

Fig. 3 shows another example of the assignment pattern of the general call slots 23 and emergency call slots 24. In this example, slots #1, #2, #4, #5, #7, and #8 are set as the general call slots 23, and the remaining slots #3 and #6 are set as the emergency call slots 24.

The ratio or number of emergency call slots 24 to be assigned can be freely set in accordance with the state of an actual connection system. In addition, the number of emergency call slots 24 can be increased/decreased, as needed. Assume that the first radio base station 15₁ has two radio units, and the number of available slots is increased to 16, which is twice as many as that in the above case. In this case, if the number of emergency call slots 24 used in the past is small, the number of emergency call slots 24 need not be increased to four, which is twice as many as the current number of slots. However, since slots for emergency calls must be ensured at a considerably high probability, the number of emergency call slots 24 must be set with a sufficient margin.

Each of the radio base stations 15₁, 15₂,... includes a CPU (Central Processing Unit), a ROM (Read Only Memory) serving as a storage medium in which predetermined control programs are stored, and a RAM (Random Access Memory) serving as a work memory. The CPU, ROM, and RAM are not illustrated. Active slot management units 25₁, 25₂,... which are provided in correspondence with the radio base stations 15₁, 15₂,... and manage active slots in the radio base stations 15₁, 15₂,... are implemented by the CPUs in the respective radio base stations in a software manner. Note that the active slot management units 25₁, 25₂,... may have CPUs other than the CPUs in the radio base stations 15₁, 15₂,....

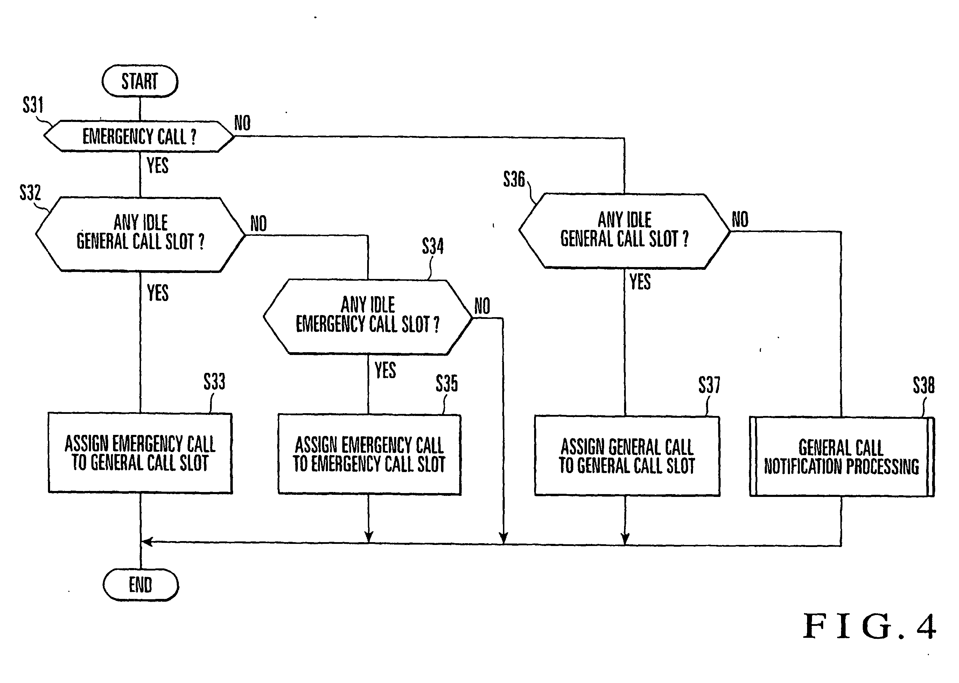

The control operation of an active slot management unit 25 in a case wherein the radio terminal apparatus 16₁ has originated a call will be described next with reference to Fig. 4.

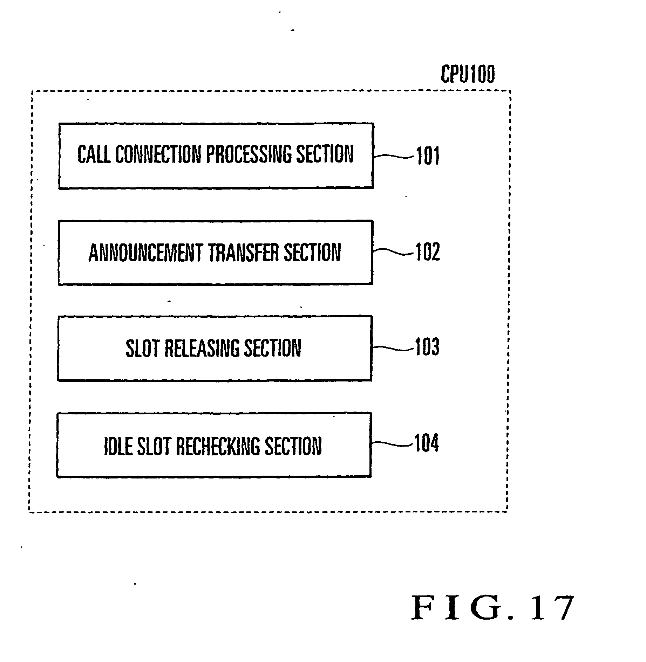

When the radio terminal apparatus 16₁ originates a call in the service area 17₁, the CPU (Fig. 17) of the active slot management unit 25₁ in the radio base station 15₁ collates the telephone number of the destination with an emergency call collation table (not shown) to determine whether the call is an emergency call (step S31). A list of telephone numbers (emergency calls) to be preferentially connected to destinations such as a police station, emergency hospital, and firehouse is stored in this emergency call collation table.

If it is determined in step S31 that the call is an emergency call, it is checked whether there are any idle slots among the general call slots 23 (step S32). If there are idle slots, the emergency call is assigned to one of them (step S33). If there are no idle slots, it is checked whether there are any idle slots in the emergency call slots 24 (step S34). If there are idle slots, the emergency call is assigned to one of them (step S35). If there are no idle slots, since all the available slots 22 cannot be used, the processing is terminated without assigning any slot.

If it is determined in step S31 that the call is not an emergency call, i.e., is a general call, it is checked whether there are any idle slots in the general call slots 23 (step S36). If there are idle slots in the general call slots 23, the general call is assigned to one of them (step S37). If there are no idle slots in the general call slots 23, general call notification processing is performed (step S38).

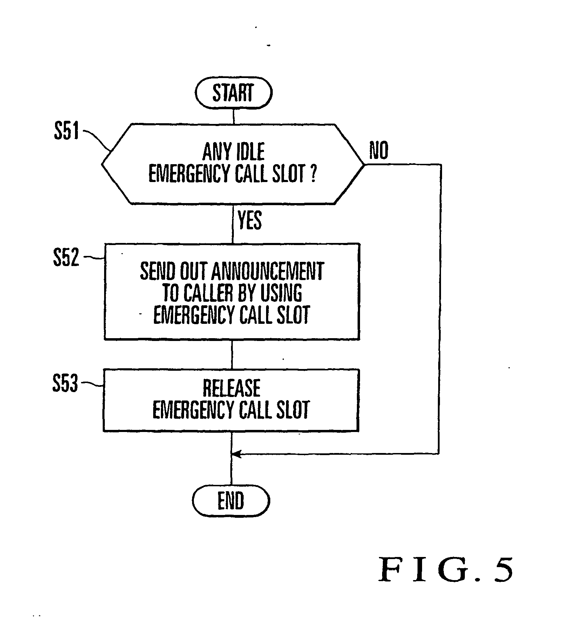

In the general call notification processing in Fig. 5, first of all, it is checked whether there are any idle slots in the emergency call slots 24 (Fig. 2) (step S51). If there are no idle slots, the processing is terminated. If there are idle slots in the emergency call slots 24, a predetermined announcement set in advance in a speech output ROM (not shown) is sent to the originating side by using one of the idle emergency call slots 24 (step S52). This announcement informs that the call cannot be connected to the destination. For example, the announcement "We currently have difficulty in connecting you to the destination because of line congestion. Please call later." is sent to the originating side. One of the emergency call slots 24 is used only for this short period. When the announcement is over, the used emergency call slot 24 is released (step S53).

According to this embodiment, the time during which the emergency call slot 24 is used for a general call is very short, and hence there is substantially no influence on emergency calls. In addition, since the terminal which has originated the general call is notified of the inability to connect the call because of line congestion, the notified person can recognize the situation. This allows the caller to recognize that the connection failure has not occurred because the line is busy.

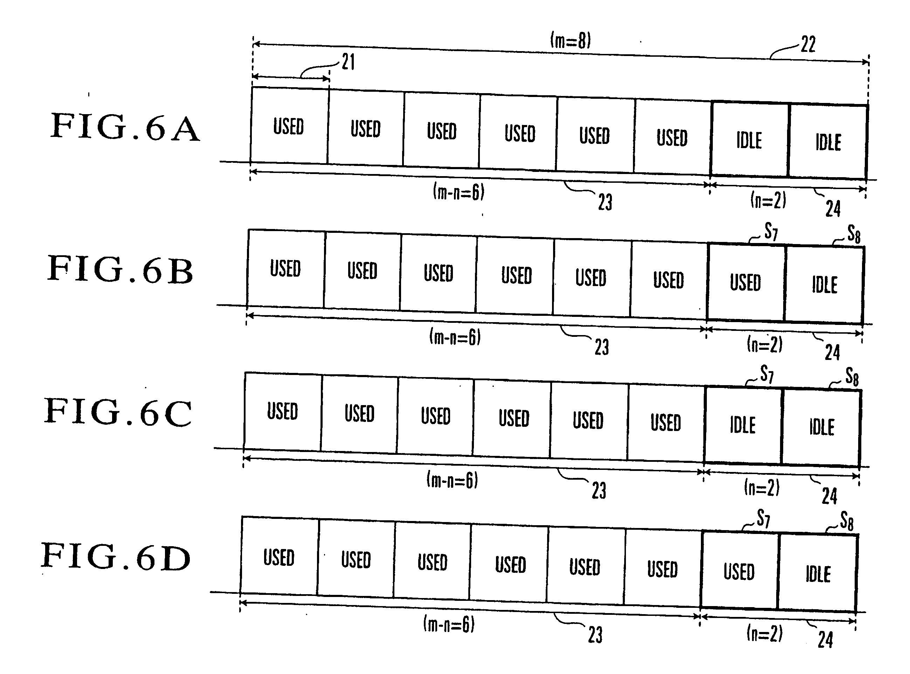

Figs. 6A to 6D show the states of slots when general and emergency calls are generated in the absence of the idle general call slots 23. Referring to Fig. 6A, with available slot count M = 8, all the six general call slots 23 are in use, and all the two emergency call slots 24 are idle slots.

When a general call is generated in this state, one slot S₇ of the two emergency call slots 24 is used to send an announcement, as shown in Fig. 6B. When the announcement is completely sent, the slot S₇ is restored from the active state to the idle state, as shown in Fig. 6C. Note that the other slot S₈ of the emergency call slots 24 may be used in place of the slot S₇ to send the announcement.

When an emergency call is generated in the state shown in Fig. 6A, since all the six general call slots 23 are in use, the single slot S₇ of the two emergency call slots 24 is assigned to the emergency call, as shown in Fig. 6D. Therefore, only the other slot S₈ becomes an idle slot for emergency. When a general call is generated in this state, an announcement can be sent by using the idle slot S₈, as shown in Fig. 6B. Although the case wherein the slot S₇ of the two idle emergency call slots 24 is assigned to an emergency call has been described above, the slot S₈ may be assigned instead.

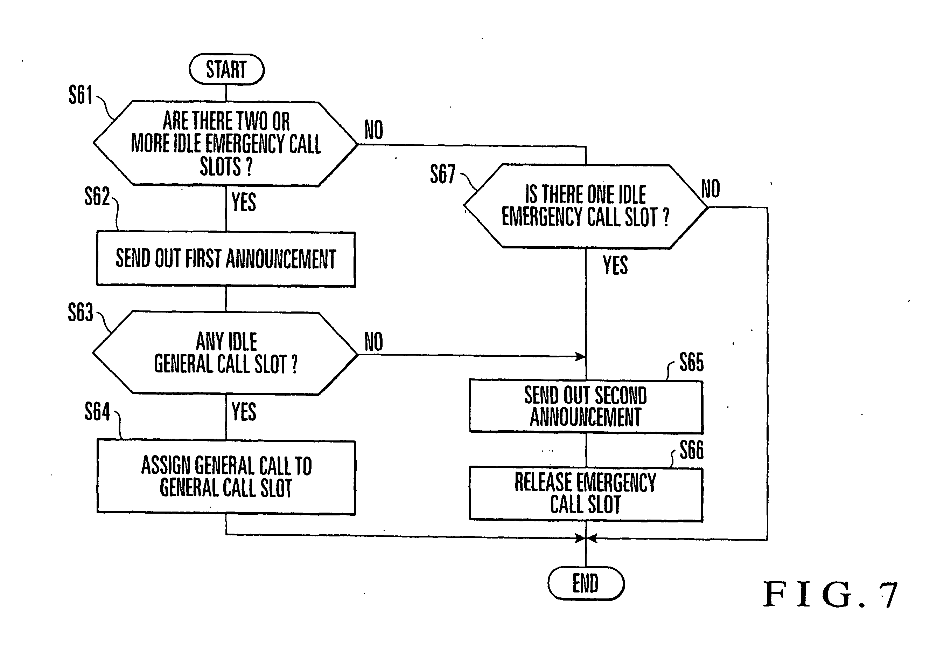

General call notification processing in a call connection system according to the second embodiment of the present invention will be described next with reference to Fig. 7. In this embodiment, if it is determined in step S36 in Fig. 4 that there is no idle slot in the general call slots 23, the general call notification processing shown in Fig. 7 is executed. Note that the arrangement of the call connection system according to this embodiment is the same as that shown in Fig. 1, a description thereof will be omitted.

Referring to Fig. 7, first of all, it is checked whether there are two or more idle slots in emergency call slots 24 (step S61). If there are two or more idle slots, the number of slots to be assigned to emergency calls is sufficient to some degree. In this case, the first announcement is sent to the originating terminal by using one of the emergency call slots (step S62). The content of this announcement is "We are waiting for the line to become idle. Please wait for a while.", i.e., the content that makes the caller wait for a short period of time. Thereafter, the CPU of the active slot management unit checks whether there are any idle slots in the general call slots 23 (step S63). If one of the general call slots 23 becomes idle during this short period of time (about 10 to 20 sec), the general call is assigned to the idle general call slot 23 to allow speech communication with the destination (step S64).

If it is determined in step S63 that there is still no idle slot in the general call slots 23, the second announcement is sent by using the emergency call slot 24 again (step S65). The emergency call slot 24 is then released (step S66). The announcement used in step S65 may be basically the same as that in step S52 in the first embodiment.

If it is determined in step S61 that there are not two or more idle slots in the emergency call slots 24, it is checked whether there is one idle slot in the emergency call slots 24 (step S67). If there is no idle slot, the processing is terminated without performing connection. If there is one idle slot, the second announcement is sent out first (step S65), and then the emergency call slots 24 is released (step S66). This processing is substantially the same as that in the first embodiment.

In this embodiment, if there are a certain number of idle slots in the emergency call slots 24, the idle emergency call slot 24 is used only for one-way transmission of an announcement from the active slot management unit 25₁ side. If one of the general call slots 23 becomes idle after a lapse of a certain period of time since the absence of idle slots in the general call slots 23, the general call is effectively used.

Assume that speech communication using the emergency call slot 24 is allowed with respect to a general call when there is no idle slots in the general call slots 23. In this case, if the speech communication based on the general call takes much time, an emergency call is affected. In this embodiment, however, in such a case, the active slot management unit 25₁ only sends a one-way announcement without performing speech communication itself. Even if, therefore, the first and second announcements are consecutively made, it takes a relatively short period of time. In addition, when a general call is generated, since the number of emergency call slots 24 are prepared with a slight margin, there is hardly any influence on emergency calls in practice.

Assume that there is only one idle emergency call slot 24 in sending out the second announcement, and this slot is used for a general call. In this case, there is temporarily no idle slot for an emergency call. In such a case as well, however, the time during which the emergency call slot 24 is used for a general call is only the time during which the second announcement is sent, and the time by which connection for an emergency call is waited for the first announcement is very short. This problem can therefore be solved by making connection wait (delay) for a slight period of time. In addition, since the occurrence frequency of emergency calls is lower than that of general calls, the possibility that such a slight influence is produced in practice is very low.

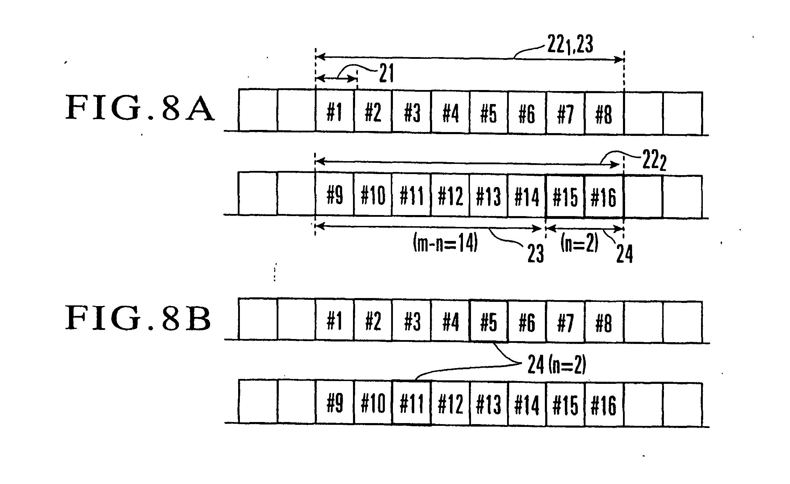

Figs. 8A and 8B show the states of slots in a case wherein a radio base station is equipped with two radio units, and there are a total of 16 available slots. As shown in Fig. 8A, the available slots 22 include a total of 16 (m = 16) first and second available slots 22₁ and 22₂. Of these slots, two slots #15 and #16 are assigned as the emergency call slots 24, and the 14 remaining slots #1 to #14 are assigned as general call slots 23.

As shown in Fig. 8B, the emergency call slots 24 may be assigned to one first available slot 22₁ (slot #5) and one second available slot 22₂ (slot #11). If the number (m) of available slots 22 increases to a certain extent, emergency calls can be satisfactorily handled even if the number of emergency call slots 24 is not increased in proportion to m. In addition, if there are two or more emergency call slots 24, as described above, the chances of connecting general calls can be increased to a certain extent.

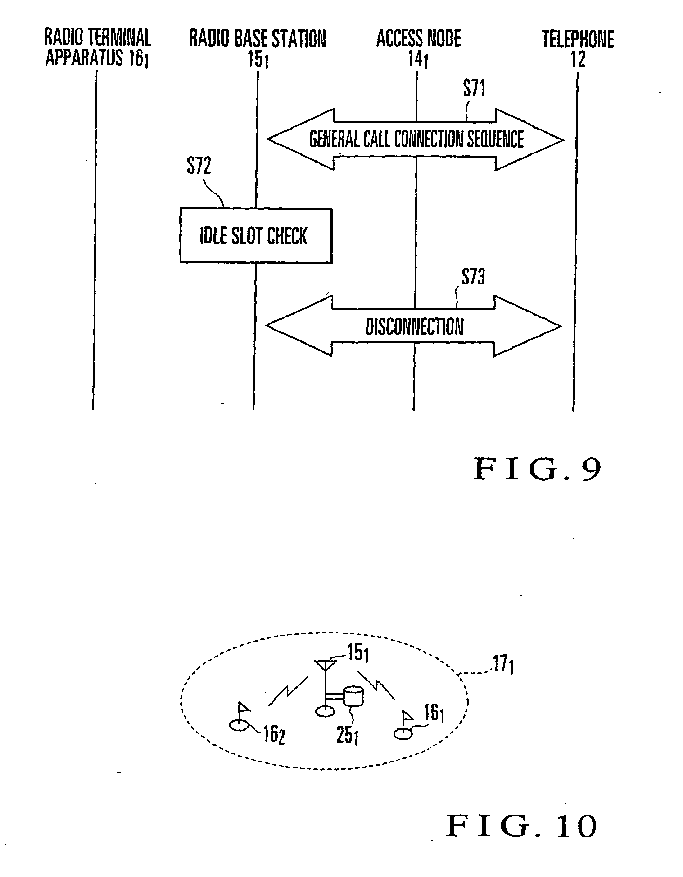

Termination processing in a call connection system according to the third embodiment of the present invention will be described next with reference to Fig. 9. The arrangement of the call connection system according to this embodiment is the same as that shown in Fig. 1, and a description thereof will be omitted.

A fixed telephone 12 connected to a network 11 originates a call to a radio terminal apparatus 16₁ as a destination located in a service area 17₁ managed by a radio base station 15₁. In this case, connection processing is performed to the radio base station 15₁ through the network 11 by a general call connection sequence (step S71). In response to this connection processing, an active slot management unit 25₁ connected to the radio base station 15₁ checks whether a general call slot 23 can be used (step S72). That is, the active slot management unit 25₁ checks the presence of an idle slot in the general call slots 23.

If there is an idle slot in the general call slots 23, the idle slot is assigned to this call, and connection to the radio terminal apparatus 16₁ is completed. With this operation, speech communication between the fixed telephone 12 connected to the network 11 and the radio terminal apparatus 16₁ is started. If it is determined in step S72 that there is no idle slot, connection cannot be done. In this case, as shown in Fig. 9, disconnection processing is performed between the radio base station 15₁ and-the network 11 (step S73).

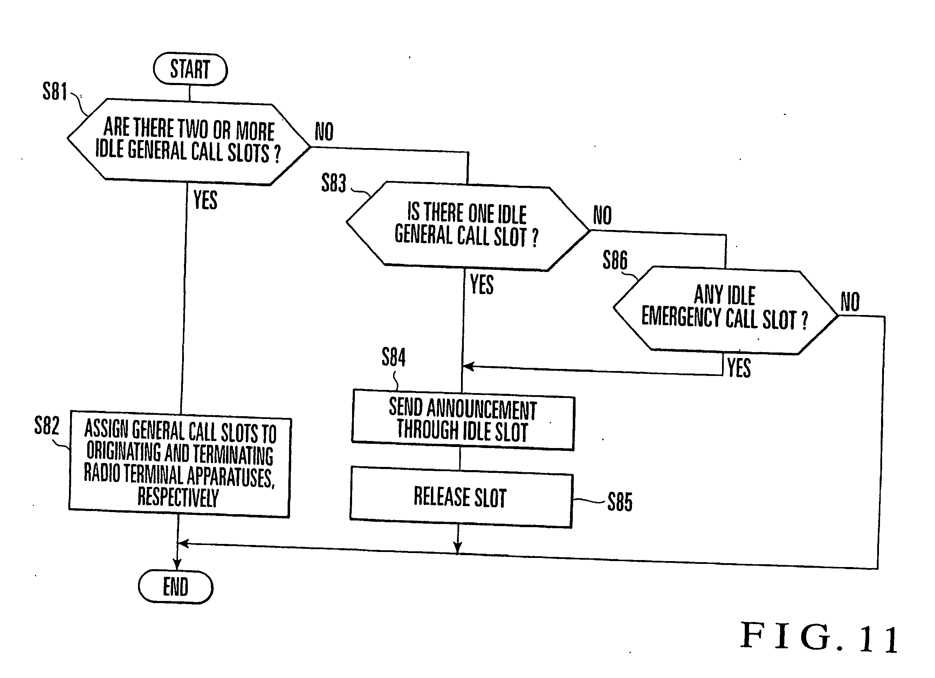

Origination processing for a general call into the same service area in a call connection system according to the fourth embodiment of the present invention will be described next with reference to Figs. 10 and 11. Referring to Fig. 10, a radio terminal apparatus 16₁ located in a service area 17₁ originates a general call to a radio terminal apparatus 16₂ as a destination which is located in the same service area.

As shown in Fig. 11, when a request for the connection of a general call into the same service area is generated, the CPU of an active slot management unit 25₁ connected to a radio base station 15₁ checks whether there are two or more idle general call slots 23 (step S81). If there are two or more idle slots, one of them is assigned to the originating radio terminal apparatus 16₁, and another slot is assigned to the terminating radio terminal apparatus 16₂ (step S82) With this operation, communication between the radio terminal apparatuses 16₁ and 16₂ is started.

If it is determined in step S81 that only one of the general call slots 23 is idle or there is no idle slot, communication between the radio terminal apparatuses 16₁ and 16₂ cannot be started. In this case, the CPU of the active slot management unit 25₁ checks whether there is only one idle slot in the general call slots 23 (step S83). If there is only one idle general call slot 23, an announcement is sent out by using this slot as in step S52 (Fig. 5). Thereafter, the general call slot 23 is released (step S85), and the processing is terminated.

If it is determined in step S83 that there is no idle general call slot 23, it is checked whether there are any idle slots in emergency call slots 24 (step S86). If there is an idle slot in the emergency call slots 24, an announcement is send out through this idle emergency call slot 24 (step S84), and then the slot is released (step S85). Thereafter, the processing is terminated. If it is determined in step S86 that there is no idle slot in the emergency call slot 24, the processing is immediately terminated.

Since the processing for an emergency call is the same as that in the first and second embodiments, a description thereof will be omitted. In addition, after a lapse of a predetermined period of time including the announcement transfer time in step S84, the presence/absence of an idle slot may be checked again as in the first and second embodiments.

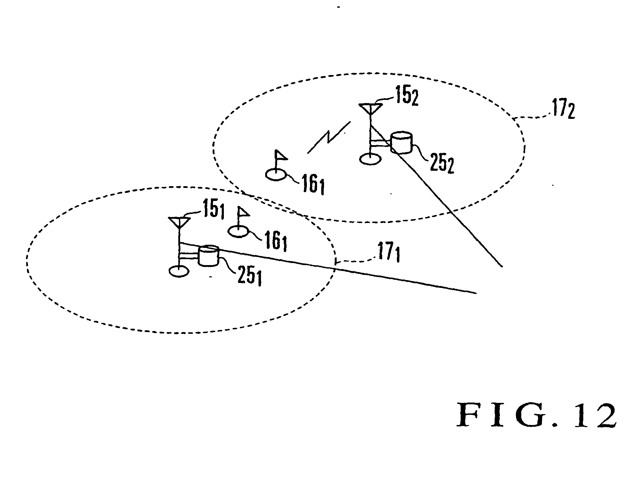

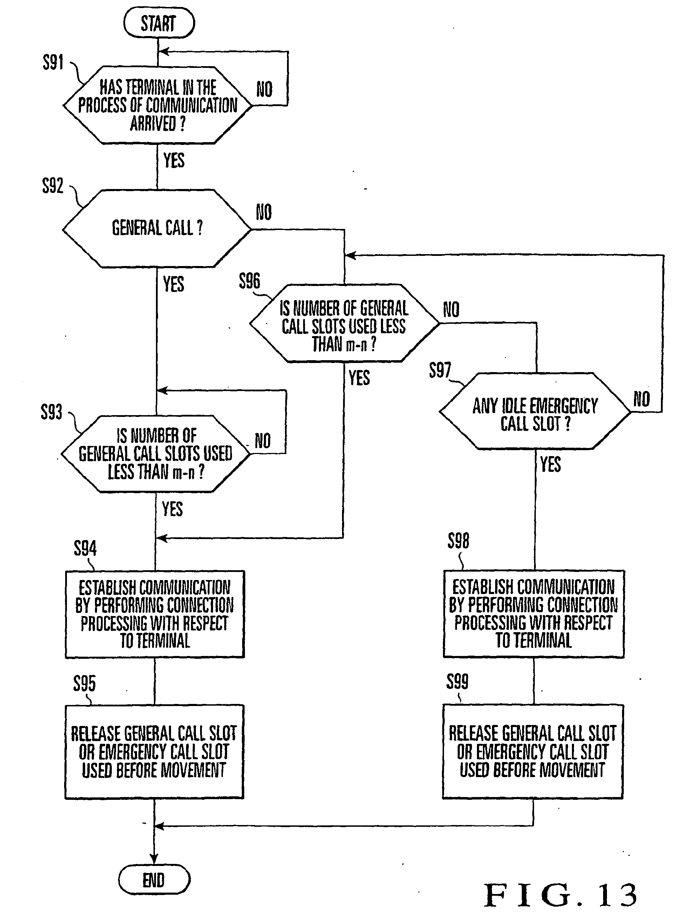

Handover processing in a call connection system according to the fifth embodiment of the present invention will be described next with reference to Figs. 12 and 13. The same reference numerals as in Fig. 1 denote the same parts in Fig. 12, and a description thereof will be omitted. Handover is processing to be done to continue communication when a radio terminal apparatus 16₁ moves from a current service area 17₁ (cell) to an adjacent service area (cell) 17₂. In this case as well, idle slot control needs to be done by active slot management units 25₁ and 25₂.

A case wherein the radio terminal apparatus 16₁ moves from the service area 17₁ to the service area 17₂ while communication is performed between the radio base station 15₁ and the radio terminal apparatus 16₁ will be described. At this time, a second radio base station (handover processing means) 15₂ at the movement destination performs the connection processing shown in Fig. 13 between itself and the radio terminal apparatus 16₁.

It is always checked whether a radio terminal apparatus in the process of communication has entered the service area 17₂ (step S91). If the movement of the radio terminal apparatus 16₁ from the service area 17₁ to the service area 17₂ is detected, it is checked whether the communication is being done with a general call or emergency call (step S92). If the communication is being done with a general call, it is checked whether the number of general call slots 23 used is less than (m - n) (step S93). In this check, it is checked whether there are any idle slots in the general call slots 23.

If there is an idle general call slot 23, the second radio base station 15₂ performs connection processing for the radio terminal apparatus 16₁ to establish communication by using the idle general call slot 23 (step S94). Subsequently, the general call slot 23 for the active slot management unit 25₁ in the radio base station 15₁ which has been used for communication by the radio terminal apparatus 16₁ is released (step S95). This makes the radio terminal apparatus 16₁ perform communication in the service area 17₂ after movement under the supervision (control) of the second radio base station 15₂.

In step S93, it may be determined that there are no idle slots in the general call slots 23 for the active slot management unit 25₂ in the second radio base station 15₂. In this case, however, the line cannot be disconnected. For this reason, the terminal apparatus is waited until an idle slot appears in the general call slots 23 for the active slot management unit 25₂. During this wait time, the general call slot 23 for the active slot management unit 25₁ in the radio base station 15₁ is used for communication.

A case wherein the radio terminal apparatus 16₁ moves from the service area 17₁ to the service area 17₂ while the apparatus is performing communication by an emergency call will be described next. In this case, it is determined in step S92 that a call in the process of communication is an emergency call. It is then checked whether there are any idle slots in the general call slot 23 for the active slot management unit 25₂ (step S96). If there is an idle slot in the general call slots 23, the radio base station 15₂ performs connection processing for the radio terminal apparatus 16₁ to establish communication by using the idle general call slot 23 (step S94).

An emergency call slot 24 for the active slot management unit 25₁ in the radio base station 15₁ which has been used for communication by the radio terminal apparatus 16₁ is released (step S95). If, however, the general call slot 23 is used for an emergency call, the general call slot 23 which has been used for the emergency call is released.

With handover, the radio terminal apparatus 16₁ starts communication in the service area 17₂ after movement under the supervision (control) of the radio base station 15₂. That is, if there is an idle slot in the general call slots 23 in the service area 17₂ as a movement destination, the control operation required is the same as that for a radio terminal apparatus which is performing communication with a general call.

If it is checked in step S96 that there is no idle slot in the general call slots 23 in the service area 17₂ as a movement destination, it is checked whether there are any idle slots in the emergency call slots 24 for the active slot management unit 25₂ (step S97). If there is an idle slot in the emergency call slots 24, the radio base station 15₂ performs connection processing for the radio terminal apparatus 16₁ to establish communication by using the idle emergency call slot 24 (step S98). Thereafter, the general call slot 23 or emergency call slot 24 for the active slot management unit 25₁ in the radio base station 15₁ which has been used for communication by the radio terminal apparatus 16₁ is released (step S99). With this operation, the radio terminal apparatus 16₁ starts communication in the service area 17₂ after movement under the supervision (control) of the radio base station 15₂.

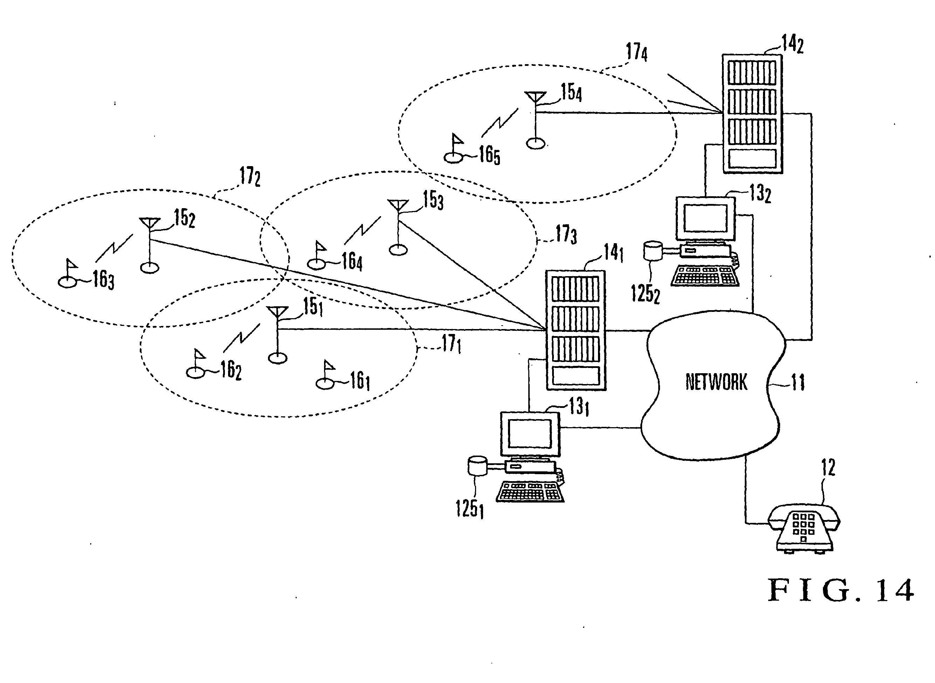

Figs. 14, 15, and 16 show a call connection system according to the sixth embodiment of the present invention. In this embodiment, as shown in Fig. 14, active slot management units 125₁ and 125₂ are connected to NMSs (Network Management Systems) 13₁ and 13₂. The NMS 13₁ connected to the active slot management unit 125₁ is connected to radio base stations 15₁, and 15₂, and 15₃ through an access node 14₁. The active slot management unit 125₁ therefore manages all the radio base stations 15₁, 15₂, and 15₃ collectively. The active slot management unit 125₂ also collectively manages all the radio base stations in its charge.

Note that an active slot management unit need not always be installed on the NMS 13 side and may be installed on the access node 14 side or inside a network 11.

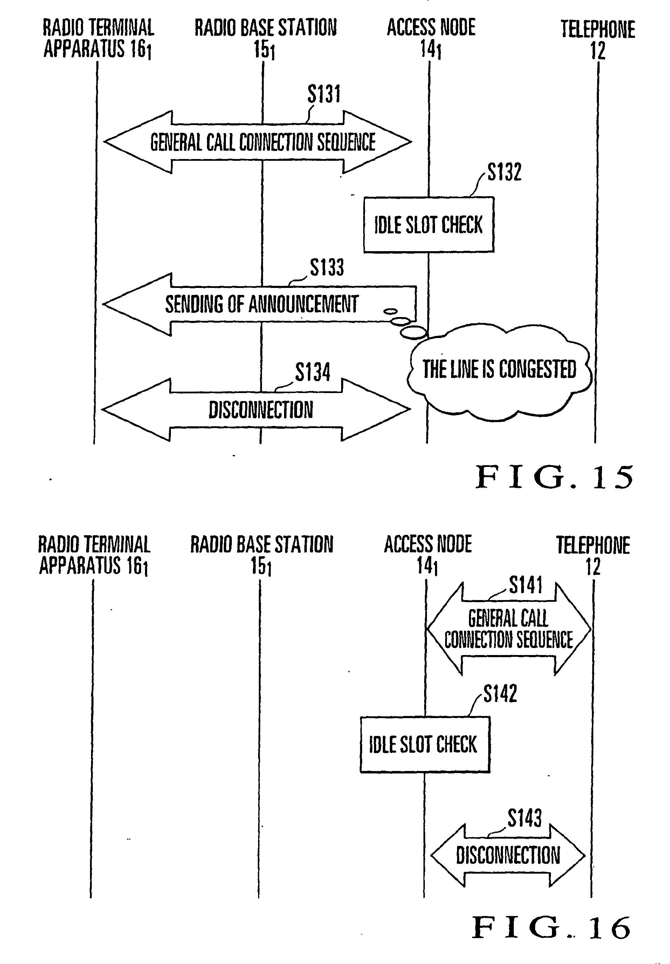

General call origination request processing in a TDMA communication system like that shown in Fig. 14 will be described with reference to Fig. 15.

When the radio terminal apparatus 16₁ generates a request to originate a general call, connection processing is done between the radio terminal apparatus 16₁ and the first access node 14₁ (step S131). The CPU of the active slot management unit 125₁ in the NMS 13₁ connected to the access node 14₁ checks whether there are any idle slots in general call slots 23 for the corresponding radio base station 15₁ (step S132). If there is an idle slot in the general call slots 23, connection processing is continued by using the idle general call slot 23.

If, however, there is no idle slot in the general call slots 23, communication cannot be done by using any of the general call slots 23. In this case, the emergency call slot 24 (Fig. 2) is used to perform connection processing between the radio terminal apparatus 16₁ and the radio base station 15₁. At this time, the connection processing is performed between the radio base station 15₁ and the access node 14₁. When the connection between the access node 14₁ and the radio terminal apparatus 16₁ is established, the access node 14₁ sends out, to the corresponding radio terminal apparatus 16₁, an announcement informing that the call cannot be connected to the destination because of line congestion (step S133). Thereafter, disconnection processing is performed between the access node 14₁ and the radio terminal apparatus 16₁, and the emergency call slot 24 used for the announcement is released (step S134).

The termination processing based on a general call from a fixed telephone connected to a network to a radio terminal apparatus under the supervision of a radio base station having no idle general call slot in the system according to this embodiment will be described with reference to Fig. 16. Fig. 16 shows a case wherein the fixed telephone 12 connected to the network 11 originates a general call to the radio terminal apparatus 16₁ as a destination.

First of all, connection from the network 11 to the access node 14₁ is performed (step S141). The CPU of the active slot management unit 125₁ connected to the access node 14₁ through the NMS 13₁ checks whether there is any idle slot in the general call slots 23 for the radio terminal apparatus 16₁ (step S142). If there is an idle slot in the general call slots 23, connection is established between the radio terminal apparatus 16₁ as a destination and the access node 14₁, and communication is performed between the fixed telephone 12 connected to the network 11 and the radio terminal apparatus 16₁.

If there is no idle slot in the general call slots 23, connection cannot be established between the radio terminal apparatus 16₁ and the radio base station 15₁. In this case, disconnection processing is performed between the access node 14₁ and the fixed telephone connected to the network (step S143).

Fig. 17 shows the functional blocks of the CPU of the active slot management unit described above. A CPU 100 includes a call connection processing section 101, announcement transfer section 102, and slot releasing section 103. The CPU 100 may further include an idle slot rechecking section 104. In the first and second embodiments, the call connection processing section 101 executes steps S33, S35, and S37 (Fig. 4). The announcement transfer section 102 executes step S52 (Fig. 5) and steps S62 and S65 (Fig. 7). The slot releasing section 103 executes step S53 (Fig. 5) and step S66 (Fig. 7). The idle slot rechecking section 104 executes step S63 (Fig. 7).

In the third embodiment, the call connection processing section 101 further executes step S82 (Fig. 11), the announcement transfer section 102 further executes step S84 (Fig. 11), and the slot releasing section 103 further executes step S85 (Fig. 11).

As has been described above, according to the present invention, when a request to connect a general call is generated, if there is not a sufficient number of general call slots for this new communication and there is an idle slot in the emergency call slots, an announcement informing that the general call cannot be connected because of line congestion is sent to the originating terminal. Therefore, by using this emergency call slot for the announcement for a short period of time, appropriate information can be provided for the caller. In addition, since the time taken for the announcement is relatively short, there is no possibility of interfering with emergency calls. Furthermore, since. the caller can know that the general call cannot be connected not because the line is busy but because the line is congested, he/she can consider a call timing again.

According to the present invention, when a request to connect a general call is generated, if there is not a sufficient number of general call slots for this new communication and there is an idle slot in the emergency call slots, the first announcement informing that a standby state is temporarily set for the connection of the general call is sent out to the originating terminal by using the idle emergency call slot. This makes it possible to set a standby state for the occurrence of an idle general call slot for communication for a relatively short period of time. If, therefore, an idle general call slot occurs in this interval, the load on the caller can be reduced. In addition, if no idle general call slot occurs even at the end of this interval, the second announcement informing that the general call cannot be connected because of line congestion is sent out to the originating terminal. By using emergency call slots for these announcements for short periods of time, appropriate information can be provided for the caller. In addition, since the times for the first and second announcements are relatively short, there is no possibility of interfering with general calls. Furthermore, since the caller can know that the general call cannot be connected not because the line is busy but because the line is congested, he/she can consider a call timing again.

Moreover, according to the present invention, handover can be reliably performed.

## Claims

1. A call connection system for assigning at least one specific one of a plurality of slots, in advance, as an emergency call slot for processing an emergency call and for assigning remaining slots, in advance, as general call slots for processing general calls that need not be preferentially handled, **characterized by** comprising:
means for determining whether a call connection request is an emergency call connection request or a general call connection request;
call connection processing means (101) for, if there is an idle general call slot, performing call connection processing by using the idle slot in response to a general call connection request and, if at least one of the general call slots and emergency call slots is idle, performing call connection processing by using the idle slot in response to an emergency call connection request;
announcement transfer means (102) for, if there is no idle general call slot and there is an idle emergency call slot, assigning one of the emergency call slots to an originating terminal, in response to a general call connection request, to transfer a first announcement informing that the general call cannot be connected because of line congestion to the originating terminal; and
slot releasing means (103) for releasing the emergency call slot assigned to the originating terminal after at least transfer of the first announcement is completed by said announcement transfer means.

2. A call connection system according to claim 1, wherein, if there are two idle general call slots for an originating terminal and terminating terminal,
said call connection processing means (101) is adapted to perform call connection processing by using the idle slots in response to a connection request for a general call that designates the terminating terminal in the same service area as the originating terminal;
and wherein, if there are not two idle general call slots for the originating terminal and terminating terminal, said announcement transfer means (102) is adapted to assign one idle emergency call slot to the originating terminal, in response to the general call connection request, and is adapted to transfer a first announcement informing that the general call cannot be connected because of line congestion to the originating terminal.

3. A system according to claim 1 or 2, wherein
said system further comprises checking means (104) for rechecking occurrence of an idle general call slot after a lapse of a predetermined period of time including a transfer time of the first announcement,
if said checking means determines that there is an idle general call slot, said call connection processing means is adapted to perform connection processing for a general call corresponding to a request by using the idle general call slot,
if said checking means does not determine the presence of an idle general call slot, said announcement transfer means is adapted to transfer a second announcement informing that the general call cannot be connected because of line congestion to the originating terminal, and
said slot releasing means is adapted to release the emergency call slot assigned to the originating terminal upon completion of transfer of the second announcement.

4. A system according to claim 1, 2 or 3, wherein
said system further comprises handover processing means for, when a terminal in the process of communication moves from a first service area to a second service area, performing handover by ensuring a necessary slot if there is an idle general call slot in the second service area, and
said slot releasing means is adapted to release the general call slot that has been used in the first service area, after the handover processing.

5. A system according to claim 4, wherein said handover processing means is adapted to continue communication by continuously occupying the general call slot in the first service area if there is no idle general call slot in the second service area.

6. A call connection method **characterized by** comprising the steps of:
assigning at least one specific one of a plurality of slots, in advance, as an emergency call slot for processing an emergency call and assigning remaining slots, in advance, as general call slots for processing general calls that need not be preferentially handled; **characterized by** determining whether a call connection request is an emergency call connection request or a general call connection request;
if there is an idle general call slot, performing call connection processing by using the idle slot in response to a general call connection request, and if at least one of the general call slots and emergency call slots is idle, performing call connection processing by using the idle slot in response to an emergency call connection request,
if there is no idle general call slot and there is an idle emergency call slot, assigning one of the emergency call slots to an originating terminal, in response to a general call connection request, to transfer a first announcement informing that the general call cannot be connected because of line congestion to the originating terminal; and
releasing the emergency call slot assigned to the originating terminal after at least transfer of the first announcement is completed.

7. A method according to claim 6, wherein call connection processing is performed, if there are two idle general call slots for an originating terminal and terminating terminal, by using the idle slots in response to a connection request for a general call that designates the terminating terminal in the same service area as the originating terminal; and
wherein if there are not two idle general call slots for the originating terminal and terminating terminal, one idle emergency call slot is assigned to the originating terminal, in response to the general call connection request, and a first announcement is transferred informing that the general call cannot be connected because of line congestion to the originating terminal.

8. A method according to claim 6 or 7, wherein
the method further comprises the steps of:
rechecking occurrence of an idle general call slot after a lapse of a predetermined period of time including a transfer time of the first announcement after transfer of the first announcement;
if it is determined upon a recheck that there is an idle general call slot, performing connection processing for a general call corresponding to a request by using the idle general call slot; and
if the presence of an idle general call slot is not determined upon the recheck, transferring a second announcement informing that the general call cannot be connected because of line congestion to the originating terminal; and
the releasing step comprises the step of releasing the emergency call slot assigned to the originating terminal upon completion of transfer of the second announcement.

## Patentansprüche

1. Rufverbindungsaufbau-System für eine Vorab-Zuweisung mindestens eines bestimmten von mehreren Zeitschlitzen als einen Notruf-Zeitschlitz zum Verarbeiten eines Notrufs und für eine Vorab-Zuweisung der übrigen Zeitschlitze als Normalruf-Zeitschlitze zum Verarbeiten von Normalrufen, die nicht vorrangig bedient werden müssen,
**gekennzeichnet durch**:
Einrichtungen zum Feststellen, ob eine Ruf-Verbindungsaufbau-Anforderung eine Notruf-Verbindungsaufbau-Anforderung oder eine Normalruf-Verbindungsaufbau-Anforderung ist;
Rufverbindungsaufbau-Einrichtungen (101)
zum Durchführen eines Rufverbindungsaufbauprozesses als Antwort auf eine Normalruf-Verbindungsaufbau-Anforderung, wobei, wenn ein freier Normalruf-Zeitschlitz vorhanden ist, der freie Zeitschlitz verwendet wird; und
zum Durchführen eines Rufverbindungsaufbauprozesses als Antwort auf eine Notruf-Verbindungsaufbau-Anforderung, wobei, wenn unter den Normalruf-Zeitschlitzen und unter den Notruf-Zeitschlitzen mindestens ein Zeitschlitz frei ist, der freie Zeitschlitz verwendet wird;
Mitteilungsübertragung-Einrichtungen (102), um
bei Abwesenheit von freien Normalruf-Zeitschlitzen und Anwesenheit eines freien Notruf-Zeitschlitzes einem anfordernden Endgerät als Antwort auf eine Normalruf-Verbindungsaufbau-Anforderung einen der Notruf-Zeitschlitze zuzuweisen, um dem anfordernden Endgerät eine erste Mitteilung zu senden, die darüber informiert, daß wegen Leitungsüberlastung die Normalrufverbindung nicht aufgebaut werden kann; und
Zeitschlitzfreigabe-Einrichtungen (103) zur Freigabe des dem anfordernden Endgerät zugewiesenen Notruf-Zeitschlitzes, nachdem das Senden zumindest der ersten Mitteilung **durch** die Mitteilungsübertragung-Einrichtung abgeschlossen ist.

2. Rufverbindungsaufbausystem nach Anspruch 1,
worin, wenn es zwei freie Normalruf-Zeitschlitze für ein anforderndes Endgerät und ein angefordertes Endgerät gibt, die Rufverbindungsaufbauprozeß-Einrichtung (101) angepaßt ist, unter Verwendung der freien Zeitschlitze einen Rufverbindungsaufbauprozeß als Antwort auf eine Normalruf-Verbindungsaufbau-Anforderung durchzuführen, die das anfordernde Endgerät in dem gleichen Dienstgebiet wie das angeforderte Endgerät spezifiziert; und
wobei, wenn es keine zwei freien Normalruf-Zeitschlitze für das anfordernde Endgerät und das angeforderte Endgerät gibt, die Mitteilungsübertragung-Einrichtung (102) angepaßt ist, als Antwort auf die Normalruf-Verbindungsaufbau-Anforderung dem anfordernden Endgerät einen freien Notruf-Zeitschlitz zuzuweisen, und angepaßt ist, dem anfordernden Endgerät eine erste Mitteilung zu senden, die darüber informiert, daß wegen Leitungsüberlastung die Normalrufverbindung nicht aufgebaut werden kann.

3. System nach Anspruch 1 oder 2, worin das System außerdem eine Prüfeinrichtung (104) aufweist, um nach Ablauf einer vorgegebenen Zeitdauer, darin enthalten die Zeit zum Senden der ersten Mitteilung, ein Auftreten eines freien Normalruf-Zeitschlitzes erneut zu prüfen,
wenn die Prüfeinrichtung feststellt, daß es einen freien Normalruf-Zeitschlitz gibt, die Rufverbindungsaufbauprozeß-Einrichtung angepaßt ist, unter Verwendung des freien Normalruf-Zeitschlitzes einen Verbindungsaufbauprozeß für einen Normalruf entsprechend einer Anforderung durchzuführen,
wenn die Prüfeinrichtung feststellt, daß es keinen freien Normalruf-Zeitschlitz gibt, die Mitteilungsübertragung-Einrichtung angepaßt ist, dem anfordernden Endgerät eine zweite Mitteilung zu senden, die darüber informiert, daß wegen Leitungsüberlastung die Normalrufverbindung nicht aufgebaut werden kann, und
die Zeitschlitzfreigabe-Einrichtung angepaßt ist, nach Abschluß des Sendens der zweiten Mitteilung den dem anfordernden Endgerät zugewiesenen Notruf-Zeitschlitz freizugeben.

4. System nach Anspruch 1, 2 oder 3, worin das System außerdem eine Gesprächsübergabeprozeß-Einrichtung aufweist, um eine Gesprächsübergabe (Handover) durchzuführen, wenn sich ein Endgerät im Kommunikationsprozeß von einem ersten Dienstgebiet in ein zweites Dienstgebiet bewegt, wobei ein benötigter Zeitschlitz sichergestellt wird, wenn es einen freien Normalruf-Zeitschlitz in dem zweiten Dienstgebiet gibt, und
die Zeitschlitzfreigabe-Einrichtung angepaßt ist, nach dem Gesprächsübergabeprozeß den Normalruf-Zeitschlitz, der in dem ersten Dienstgebiet verwendet worden ist, freizugeben.

5. System nach Anspruch 4, worin die Gesprächsübergabeprozeß-Einrichtung angepaßt ist, bei Abwesenheit eines freien Normalruf-Zeitschlitzes in dem zweiten Dienstgebiet eine Kommunikation durch Beibehalten der Belegung des Normalruf-Zeitschlitzes im ersten Dienstgebiet fortzuführen.

6. Rufverbindungsaufbau-Verfahren, **dadurch gekennzeichnet, daß** es die folgenden Schritte aufweist:
Vorab-Zuweisung mindestens eines bestimmten von mehreren Zeitschlitzen als einen Notruf-Zeitschlitz zum Verarbeiten eines Notrufs und Vorab-Zuweisung der übrigen Zeitschlitze als Normalruf-Zeitschlitze zum Verarbeiten von Normalrufen, die nicht vorrangig bedient werden müssen;
**gekennzeichnet durch**
Feststellen, ob eine Ruf-Verbindungsaufbau-Anforderung eine Notruf-Verbindungsaufbau-Anforderung oder eine Normalruf-Verbindungsaufbau-Anforderung ist;
Durchführen eines Rufverbindungsaufbauprozesses als Antwort auf eine Normalruf-Verbindungsaufbau-Anforderung, wobei, wenn es einen freien Normalruf-Zeitschlitz gibt, der freie Zeitschlitz verwendet wird, und
Durchführen eines Rufverbindungsaufbauprozesses als Antwort auf eine Notruf-Verbindungsaufbau-Anforderung, wobei, wenn unter den Normalruf-Zeitschlitzen und unter den Notruf-Zeitschlitzen mindestens ein Zeitschlitz frei ist, der freie Zeitschlitz verwendet wird,
- bei Abwesenheit eines freien Normalruf-Zeitschlitzes und Anwesenheit eines freien Notruf-Zeitschlitzes - Zuweisen eines Notruf-Zeitschlitzes zu einem anfordernden Endgerät als Antwort auf eine Normalruf-Verbindungsaufbau-Anforderung, um dem anfordernden Endgerät eine erste Mitteilung zu senden, die darüber informiert, daß wegen Leitungsüberlastung die Normalrufverbindung nicht aufgebaut werden kann; und
Freigabe des dem anfordernden Endgerät zugewiesenen Notruf-Zeitschlitzes nach Abschluß des Sendens zumindest der ersten Mitteilung.

7. Verfahren nach Anspruch 6, wobei, wenn es zwei freie Normalruf-Zeitschlitze für ein anforderndes Endgerät und ein angefordertes Endgerät gibt, unter Verwendung der freien Zeitschlitze ein Rufverbindungsaufbauprozeß als Antwort auf eine Normalruf-Verbindungsaufbau-Anforderung durchgeführt wird, die das angeforderte Endgerät in dem gleichen Dienstgebiet wie das anfordernde Endgerät spezifiziert; und
wobei, wenn es keine zwei freien Normalruf-Zeitschlitze für das anfordernde Endgerät und das angeforderte Endgerät gibt, dem anfordernden Endgerät als Antwort auf die Normalruf-Verbindungsaufbau-Anforderung ein freier Notruf-Zeitschlitz zugewiesen wird und dem anfordernden Endgerät eine erste Mitteilung gesendet wird, die darüber informiert, daß wegen Leitungsüberlastung die Normalrufverbindung nicht aufgebaut werden kann.

8. Verfahren nach Anspruch 6 oder 7, worin das Verfahren außerdem die folgenden Schritte aufweist:
erneutes Prüfen eines Auftretens eines freien Normalruf-Zeitschlitzes nach Ablauf einer vorgegebenen Zeitdauer, in der die Zeit zum Senden der ersten Mitteilung enthalten ist, nach Senden der ersten Mitteilung;
falls bei der erneuten Prüfung feststellt wird, daß es einen freien Normalruf-Zeitschlitz gibt: Durchführen eines Verbindungsaufbauprozesses für einen Normalruf entsprechend einer Anforderung unter Verwendung des freien Normalruf-Zeitschlitzes,
falls bei der erneuten Prüfung eine Anwesenheit eines freien Normalruf-Zeitschlitz nicht festgestellt wird: Senden einer zweiten Mitteilung zu dem anfordernden Endgerät, die darüber informiert, daß wegen Leitungsüberlastung die Normalrufverbindung nicht aufgebaut werden kann; und
der Freigabe-Schritt aufweist: Freigabe des dem anfordernden Endgerät zugewiesenen Notruf-Zeitschlitzes nach Abschluß des Sendens der zweiten Mitteilung.

## Revendications

1. Système de connexion d'appel visant à attribuer au moins une tranche spécifique d'une pluralité de tranches, à l'avance, comme une tranche d'appel d'urgence pour traiter un appel d'urgence et visant à attribuer les tranches restantes, à l'avance, comme tranches d'appel général pour traiter des appels généraux qui n'ont pas besoin d'être acheminés de manière préférentielle, **caractérisé en ce qu'**il comprend :
un moyen pour déterminer si une demande de connexion d'appel est une demande de connexion d'appel d'urgence ou une demande de connexion d'appel général ;
un moyen de traitement de connexion d'appel (101) pour, s'il y a une tranche d'appel général libre, effectuer un traitement de connexion d'appel en utilisant la tranche libre en réponse à une demande de connexion d'appel général et, si au moins une des tranches d'appel général et des tranches d'appel d'urgence est libre, effectuer un traitement de connexion d'appel en utilisant la tranche libre en réponse à une demande de connexion d'appel d'urgence ;
un moyen de transfert d'annonce (102) pour, s'il n'y a pas de tranche d'appel général libre et qu'il y a une tranche d'appel d'urgence libre, attribuer une des tranches d'appel d'urgence à un terminal émetteur, en réponse à une demande de connexion d'appel général, pour transférer une première annonce informant que l'appel général ne peut pas être connecté à cause d'un encombrement de ligne vers le terminal émetteur ; et
un moyen de libération de tranche (103) pour libérer la tranche d'appel d'urgence attribuée au terminal émetteur après qu'au moins le transfert de la première annonce soit achevé par ledit moyen de transfert d'annonce.

2. Système de connexion d'appel selon la revendication 1, dans lequel, s'il y a deux tranches d'appel général libres pour un terminal émetteur et un terminal d'arrivée,
ledit moyen de traitement de connexion d'appel (101) est adapté pour effectuer un traitement de connexion d'appel en utilisant les tranches libres en réponse à une demande de connexion pour un appel général qui désigne le terminal d'arrivée dans la même zone de service que le terminal émetteur ;
et dans lequel, s'il n'y a pas deux tranches d'appel général libres pour le terminal émetteur et le terminal d'arrivée, ledit moyen de transfert d'annonce (102) est adapté pour attribuer une tranche d'appel d'urgence libre au terminal émetteur, en réponse à la demande de connexion d'appel général, et est adapté pour transférer une première annonce informant que l'appel général ne peut pas être connecté à cause d'un encombrement de ligne vers le terminal émetteur.

3. Système selon la revendication 1 ou 2, dans lequel
ledit système comprend en outre un moyen de vérification (104) pour vérifier à nouveau l'occurrence d'une tranche d'appel général libre après l'écoulement d'une période de temps prédéterminée incluant un temps de transfert de la première annonce,
si ledit moyen de vérification détermine qu'il y a une tranche d'appel général libre, ledit moyen de traitement de connexion d'appel est adapté pour effectuer un traitement de connexion pour un appel général correspondant à une demande en utilisant la tranche d'appel général libre,
si ledit moyen de vérification ne détermine pas la présence d'une tranche d'appel général libre, ledit moyen de transfert d'annonce est adapté pour transférer une seconde annonce informant que l'appel général ne peut pas être connecté à cause d'un encombrement de ligne vers le terminal émetteur, et
ledit moyen de libération de tranche est adapté pour libérer la tranche d'appel d'urgence attribuée au terminal émetteur à l'achèvement du transfert de la seconde annonce.

4. Système selon la revendication 1, 2 ou 3, dans lequel
ledit système comprend en outre un moyen de traitement de transfert intercellulaire pour, lorsqu'un terminal en cours de communication se déplace d'une première zone de service à une seconde zone de service, effectuer un transfert intercellulaire en garantissant une tranche nécessaire s'il y a une tranche d'appel général libre dans la seconde zone de service, et
ledit moyen de libération de tranche est adapté pour libérer la tranche d'appel général qui a été utilisée dans la première zone de service, après le traitement de transfert intercellulaire.

5. Système selon la revendication 4, dans lequel ledit moyen de traitement de transfert intercellulaire est adapté pour continuer la communication en occupant continuellement la tranche d'appel général dans la première zone de service s'il n'y a pas de tranche d'appel général libre dans la seconde zone de service.

6. Procédé de connexion d'appel **caractérisé en ce qu'**il comprend les étapes consistant à :
attribuer au moins une tranche spécifique d'une pluralité de tranches, à l'avance, comme une tranche d'appel d'urgence pour traiter un appel d'urgence et attribuer les tranches restantes, à l'avance, comme tranches d'appel général pour traiter des appels généraux qui n'ont pas besoin d'être acheminés de manière préférentielle ; **caractérisé par** les étapes consistant à
déterminer si une demande de connexion d'appel est une demande de connexion d'appel d'urgence ou une demande de connexion d'appel général ;
s'il y a une tranche d'appel général libre, effectuer un traitement de connexion d'appel en utilisant la tranche libre en réponse à une demande de connexion d'appel général, et si au moins une des tranches d'appel général et des tranches d'appel d'urgence est libre, effectuer un traitement de connexion d'appel en utilisant la tranche libre en réponse à une demande de connexion d'appel d'urgence ;
s'il n'y a pas de tranche d'appel général libre et qu'il y a une tranche d'appel d'urgence libre, attribuer une des tranches d'appel d'urgence à un terminal émetteur, en réponse à une demande de connexion d'appel général, pour transférer une première annonce informant que l'appel général ne peut pas être connecté à cause d'un encombrement de ligne vers le terminal émetteur ; et
libérer la tranche d'appel d'urgence attribuée au terminal émetteur après qu'au moins le transfert de la première annonce soit achevé.

7. Procédé selon la revendication 6, dans lequel le traitement de connexion d'appel est effectué, s'il y a deux tranches d'appel général libres pour un terminal émetteur et un terminal d'arrivée, en utilisant les tranches libres en réponse à une demande de connexion pour un appel général qui désigne le terminal d'arrivée dans la même zone de service que le terminal émetteur ; et
dans lequel, s'il n'y a pas deux tranches d'appel général libres pour le terminal émetteur et le terminal d'arrivée, une tranche d'appel d'urgence libre est attribuée au terminal émetteur, en réponse à la demande de connexion d'appel général, et une première annonce est transférée informant que l'appel général ne peut pas être connecté à cause d'un encombrement de ligne vers.le terminal émetteur.

8. Procédé selon la revendication 6 ou 7, dans lequel
le procédé comprend en outre les étapes consistant à :
vérifier à nouveau l'occurrence d'une tranche d'appel général libre après l'écoulement d'une période de temps prédéterminée incluant un temps de transfert de la première annonce après le transfert de la première annonce ;
s'il est déterminé lors d'une nouvelle vérification qu'il y a une tranche d'appel général libre, effectuer un traitement de connexion pour un appel général correspondant à une demande en utilisant la tranche d'appel général libre ; et
si la présence d'une tranche d'appel général libre n'est pas déterminée lors de la nouvelle vérification, transférer une seconde annonce informant que l'appel général ne peut pas être connecté à cause d'un encombrement de ligne vers le terminal émetteur ; et
l'étape de libération comprend l'étape consistant à libérer la tranche d'appel d'urgence attribuée au terminal émetteur à l'achèvement du transfert de la seconde annonce.
